# EUROPEAN PATENT SPECIFICATION

(11) **EP 4 151 849 B1**
(45) Date of publication and mention of the grant of the patent: **15.04.2026**
(21) Application number: 20945756.3
(22) Date of filing: 22.07.2020
(51) Int. Cl.: F02F 1/24, F02B 23/08

(54) **ENGINE COMBUSTION SYSTEM, GASOLINE ENGINE FOR HYBRID VEHICLE, AND VEHICLE**
VERBRENNUNGSMOTORSYSTEM, BENZINMOTOR FÜR EIN HYBRIDFAHRZEUG UND FAHRZEUG
SYSTÈME DE COMBUSTION POUR MOTEUR, MOTEUR À ESSENCE POUR VÉHICULE HYBRIDE ET VÉHICULE

(43) Date of publication of application: 22.03.2023
(73) Proprietor: Aurobay (Ningbo) Intelligent Technology Co., Ltd., Ningbo, Zhejiang 315336 (CN); Aurobay Technology Co., Ltd., Ningbo, Zhejiang 315800 (CN); Zhejiang Geely Holding Group Co., Ltd., Hangzhou, Zhejiang 310051 (CN)
(72) Inventor: ZHANG, Guiqiang, Hangzhou Bay New District Ningbo, Zhejiang 315336 (CN); CHEN, Guang, Hangzhou Bay New District Ningbo, Zhejiang 315336 (CN); PENG, Jiaqing, Hangzhou Bay New District Ningbo, Zhejiang 315336 (CN); WANG, Qian, Hangzhou Bay New District Ningbo, Zhejiang 315336 (CN); YAN, Xiaoqian, Hangzhou Bay New District Ningbo, Zhejiang 315336 (CN); OLIVEIRA, Diogenes De, Hangzhou Bay New District Ningbo, Zhejiang 315336 (CN); PARK, Jongwon, Hangzhou Bay New District Ningbo, Zhejiang 315336 (CN); ZHAO, Fucheng, Hangzhou Bay New District Ningbo, Zhejiang 315336 (CN); SCHOLTEN, Ingo, Hangzhou Bay New District Ningbo, Zhejiang 315336 (CN)
(74) Representative: Dragotti & Associati S.P.A.
(86) International application number: PCT/CN2020/103396
(87) International publication number: WO 2022/016403

(56) References cited:
- CN-A- 104 033 233
- CN-A- 108 869 006
- CN-A- 108 869 006
- CN-A- 109 281 750
- CN-A- 109 281 750
- CN-U- 204 851 420
- CN-U- 208 831 093
- CN-U- 210 264 972
- JP-A- 2006 152 825
- JP-A- 2019 078 209
- JP-A- H10 325 325

## Description

### Technical Field

The present application relates to the technical field of engines, in particular to an engine combustion system, a gasoline engine for hybrid vehicle and a vehicle.

### Background

Developing new energy vehicles has become one of the key development strategies in China. Hybrid vehicles and electric vehicles have better fuel economy and emission performance than traditional vehicles, and engines are of great significance for hybrid vehicles.

At present, turbocharged direct injection engines used in hybrid vehicles available in market has high power increase and strengthening degree, high combustion temperature in cylinders, easy occurrence of knocking of the engine, and high fuel consumption caused by delayed ignition angle, in addition, the turbocharged direct injection engine controls and adjusts air intake of engine through a throttle valve, which leads to high pumping loss, reduced effective output work of the engine and poor fuel economy. Besides, PN (Particle Number) emission of the turbocharged direct injection engine is poor, so a GPF (Gasoline Particulate Filter) is required to be added in post-treatment system. The GPF has high cost, and active regeneration of the GPF requires using post fuel injection to burn the carbon particles in GPF at the high temperature, which leads to poor fuel economy. CN 109 281 750 A and CN 108 869 006 A disclose different engine combustion systems.

### Summary

An aim of the present application is to solve the technical problem of poor fuel economy of engines in the prior art.

In order to solve the above technical problem, a first aspect of the present application discloses an engine combustion system including a combustion chamber and a valve structure;
the combustion chamber is provided with an air intake side gas extrusion structure, an exhaust side gas extrusion structure, a front end gas extrusion structure and a rear end gas extrusion structure;
the valve structure includes a first intake valve, a second intake valve, a first exhaust valve and a second exhaust valve; wherein the first intake valve is disposed at one side of a front end of the combustion chamber, and the second intake valve is disposed at one side of a rear end of the combustion chamber corresponding to the first intake valve; the first exhaust valve is disposed at the other side of the front end of the combustion chamber, and the second exhaust valve is disposed at one side of the rear end of the combustion chamber corresponding to the first exhaust valve;
the air intake side gas extrusion structure is disposed between the first intake valve and the second intake valve, the exhaust side gas extrusion structure is disposed between the first exhaust valve and the second exhaust valve, the front end gas extrusion structure is disposed between the first intake valve and the first exhaust valve, and the rear end gas extrusion structure is disposed between the second intake valve and the second exhaust valve; and
the air intake side gas extrusion structure, the front end gas extrusion structure and the rear end gas extrusion structure are all flat gas extrusion structures, and the exhaust side gas extrusion structure is an oblique gas extrusion structure.

Further, a first flow guide curved surface is disposed between the first intake valve and the first exhaust valve, and an intake valve end of the first flow guide curved surface is higher than an exhaust valve end of the first flow guide curved surface.

Further, a second flow guide curved surface is disposed between the first intake valve and the first exhaust valve, and an intake valve end of the second flow guide curved surface is higher than an exhaust valve end of the first second curved surface.

Further, the combustion chamber includes a piston, and the piston is convex at its top.

Further, the combustion system further includes a high-pressure direct injection system including a fuel injector capable of atomizing fuel and injecting it into the combustion chamber.

Further, the combustion system further includes a high-energy ignition system for igniting mixed gas in the combustion chamber.

A second aspect of the present application discloses a gasoline engine for hybrid vehicle, including a low-pressure EGR (Exhaust Gas Recirculation) system and the engine combustion system; the low-pressure EGR system is disposed at an exhaust side of the gasoline engine; the low-pressure EGR system includes an EGR cooler, a three-way catalytic converter and a turbocharger compressor; the three-way catalytic converter is connected with an inlet of the EGR cooler, and the turbocharger compressor is connected with an outlet of the EGR cooler.

Further, the low-pressure EGR system further includes an EGR valve, a hose and a low-pressure intake aluminum pipe; the EGR valve is connected with the outlet of the EGR cooler, the hose is communicated with the EGR valve, one end of the low-pressure intake aluminum pipe is communicated with the hose, and the other end of the low-pressure air intake aluminum pipe is communicated with the turbocharger compressor.

Further, the low-pressure EGR system further includes an EGR pressure regulating valve, and the EGR pressure regulating valve is communicated with the low-pressure intake aluminum pipe.

Further, the low-pressure EGR system further includes a three-way catalytic converter bracket for supporting the three-way catalytic converter.

A third aspect of the present application discloses a vehicle, including the gasoline engine for hybrid vehicle described above.

By adopting the technical solution described above, the present application has the following beneficial effects:
in the combustion system of the engine provided by the present application, the combustion chamber is provided with an air intake side gas extrusion structure, an air-exhaust side gas extrusion structure, a front end gas extrusion structure and a rear end gas extrusion structure; also, the air intake side gas extrusion structure , the front end gas extrusion structure and the rear end gas extrusion structure are all provided as flat gas extrusion structures, and the exhaust side gas extrusion structure is provided as an oblique gas extrusion structure, which is beneficial to improvement of tumble flow ratio and turbulence intensity in the cylinder, and makes the structure of the combustion chamber more compact, reduces a heat transfer loss in the combustion chamber and improves a combustion efficiency.

The gasoline engine for hybrid vehicle provided by the present application adopts the combustion system described above in combination with the low-pressure EGR system, and by introducing a three-way catalytic converter, a certain amount of exhaust gas can be introduced into the cylinder as demand, reduce the temperature in the cylinder, restrain knocking, advance the ignition angle, and improve the effective output work generated by combustion, so as to improve the fuel economy.

### Brief Description of Drawings

In order to more clearly explain technical solutions in the embodiments of the present application, the drawings required to be used in the description of embodiments will be briefly described below, and it will be apparent that the accompanying drawings described below are only some embodiments of the present application.
FIG. 1 is a schematic diagram of a structure of an engine combustion system according to an embodiment of the present application.
FIG. 2 is a schematic diagram of a structure of a gasoline engine for hybrid vehicle according to an embodiment of the present application.
FIG. 3 a schematic diagram of a structure of a low-pressure EGR system of a gasoline engine for hybrid vehicle according to an embodiment of the present application.

The followings are used for supplementary explanations of the accompanying drawings:
1-combustion chamber; 2-air intake side gas extrusion structure; 3-exhaust side gas extrusion structure; 4-front end gas extrusion structure;
5-rear end gas extrusion structure; 6-first intake valve; 7-second intake valve; 8-first exhaust valve; 9-second exhaust valve;
10-air filter; 11-water-air intercooler; 12-throttle body; 13-intake manifold; 14-high-pressure direct injection system; 15-high-energy ignition system; 16- turbocharger compressor; 17-three-way catalytic converter; 18-EGR cooler; 19-EGR valve; 20-EGR pressure regulating valve; 21-post-treatment; 22-hose; 23-low-pressure intake aluminum pipe.

### Detailed Description

The technical solution in the embodiments of the present application will be clearly and completely described in the following with reference to the accompanying drawings in the embodiments of the present application. It will be apparent that the described embodiments are only part of but not all of the embodiments of the present application.

"One embodiment" or "embodiments" herein refers to a particular feature, structure, or characteristic that may be included in at least one implementation of the present application. In the description of embodiments of the present application, it should be understood that the orientation or position relationships indicated by the terms "upper", "lower", "top", "bottom" are based on the orientation or position relationships shown in the drawings, which is only for convenience of describing the embodiments of the present application and simplifying the description, rather than indicating or implying that the devices or elements referred to must have the specific orientation, be constructed and operated in the specific orientation, and thus cannot be interpreted as a limitation on the present application. Furthermore, the terms "first" and "second" are used for descriptive purposes only and cannot be understood as indicating or implying relative importance or implying the amount of technical features indicated. Thus, features defined with "first" and "second" may explicitly or implicitly include one or more of such features. Moreover, the terms "first" "second", etc. are used to distinguish similar objects and not necessary to be used for describing a particular order or sequence. It should be understood that the data used in such way can be interchanged where appropriate, so that the embodiments of the present application described herein can be implemented in an order other than those illustrated or described herein.

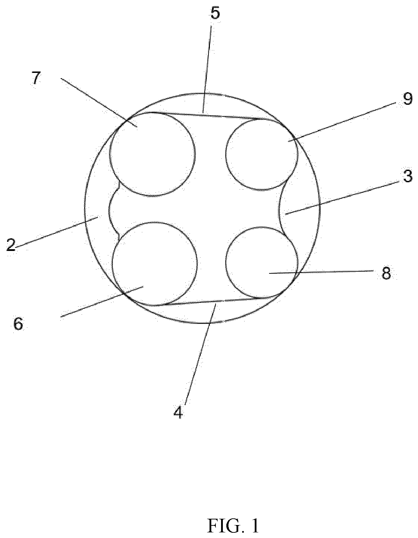

Referring to FIG. 1, FIG. 1 is a schematic diagram of a structure of an engine combustion system according to an embodiment of the present application. The combustion system includes a combustion chamber 1 and a valve structure.

The combustion chamber 1 is provided with an air intake side gas extrusion structure 2, an exhaust side gas extrusion structure 3, a front end gas extrusion structure 4 and a rear end gas extrusion structure 5.

The valve structure includes a first intake valve 6, a second intake valve 7, a first exhaust valve 8 and a second exhaust valve 9; wherein the first intake valve 6 is disposed at one side of the front end of the combustion chamber 1, the second intake valve 7 is disposed at one side of the rear end of the combustion chamber 1 corresponding to the first intake valve 6; the first exhaust valve 8 is disposed at the other side of the front end of the combustion chamber 1, the second exhaust valve 9 is disposed at one side of the rear end of the combustion chamber 1 corresponding to the first exhaust valve 8.

The air intake side gas extrusion structure 2 is disposed between the first intake valve 6 and the second intake valve 7, the exhaust side gas extrusion structure 3 is disposed between the first exhaust valve 8 and the second exhaust valve 9, and the front end gas extrusion structure 4d is disposed between the first intake valve 6 and the first exhaust valve 8, the rear end gas extrusion structure 5 is disposed between the second intake valve 7 and the second exhaust valve 9.

The air intake side gas extrusion structure 2, the front end gas extrusion structure 4 and the rear end gas extrusion structure 5 are all provided as flat gas extrusion structures, the gas extrusion structure 3 at exhaust side is an oblique gas extrusion structure.

In the engine combustion system provided by the present application, the combustion chamber 1 is provided with four gas extrusion structures, and the air intake side gas extrusion structure 2, the front end gas extrusion structure 4 and the rear end gas extrusion structure 5 are all provided as flat gas extrusion structures, and the exhaust side gas extrusion structure 3 is provided as an oblique gas extrusion structure, which can effectively increase a tumble flow ratio and turbulence intensity of mixed gas in the cylinder, increase a gas extrusion gap at the exhaust side, facilitate rapid combustion flame, reduce a risk of knocking, reduce a heat transfer loss in the combustion chamber 1 and improve an efficiency of the combustion system.

In the embodiment of the present application, a first flow guide curved surface is arranged between the first intake valve 6 and the first exhaust valve 8, and an intake valve end of the first flow guide curved surface is higher than an exhaust valve end of the first flow guide curved surface.

A second flow guide curved surface is provided between the second intake valve 7 and the second exhaust valve 9, and an intake valve end of the second flow guide curved surface is higher than an exhaust valve end of the second flow guide curved surface. An intake port and an exhaust port in the combustion system are provided as a guide structures, that is, on the flow guide curved surface, the intake valve end is arranged higher than the exhaust valve end. During an intake process, a high-speed airflow generated by the intake port flows from the intake side to the exhaust side, thus forming a large tumble flow in the engine cylinder, thereby reducing occurrence of a dead zone of flow rate at the exhaust side and cooling the temperature at the exhaust side.

In the embodiment of the present application, the combustion chamber 1 includes a piston, and the top of the piston is convex.

In the embodiment of the present application, through the design of the above-mentioned flow guide curved surface, combined with the design of the gas extrusion structure of the combustion chamber 1, and combined with the optimization of the convex piston top, a large tumble flow ratio can be formed in the cylinder, a larger turbulent intensity, more uniform mixing of fuel and gas, which is beneficial to combustion flame, reduces the risk of preignition and knocking, reduces unburned loss, and at the same time raises a compression ratio to 13, thus improving the thermal efficiency of the engine.

In embodiment of the present application, the combustion system further includes a high-pressure direct injection system 14, wherein the high-pressure direct injection system 14 includes a fuel injector capable of atomizing fuel and injecting it to the combustion chamber 1, then the fuel is rapidly and uniformly mixed with fresh air in the combustion chamber 1, and a turbulent energy center of the mixed gas is at the center of the combustion chamber 1. In the embodiment of the present application, the high-pressure direct injection system 14 (with a fuel injection pressure > 350bar) can make the fuel atomized more sufficiently, and with an advanced high tumble flow ratio port, the fuel and gas are mixed and burned more sufficiently, and the PN emission in the emission is reduced, which can meet the emission standard without adopting GPF; at the same time, the injection distance of high-pressure direct injection system 14 is shorter, which can reduce the risk of wet wall of fuel in cylinder, avoid preignition of engine and prevent engine from being damaged.

In the embodiment of the present application, the combustion system further includes a high-energy ignition system 15, wherein the high-energy ignition system 15 is used for igniting the mixed gas in the combustion chamber 1. In the embodiment of the present application, an air-fuel ratio in the mixed gas in the combustion chamber 1 is equal to 14.7. The lean mixed gas is ignited by the high-energy ignition system 15 to improve its combustion stability and ensure that COV (cyclic variation coefficient) < 3%. By homogeneous lean combustion, the fuel combustion efficiency is greatly increased, the thermal efficiency of the engine is improved, while emission of CO and THC (total amount of hydrocarbons) is greatly reduced, and emission of NOx is kept at a relatively low level.

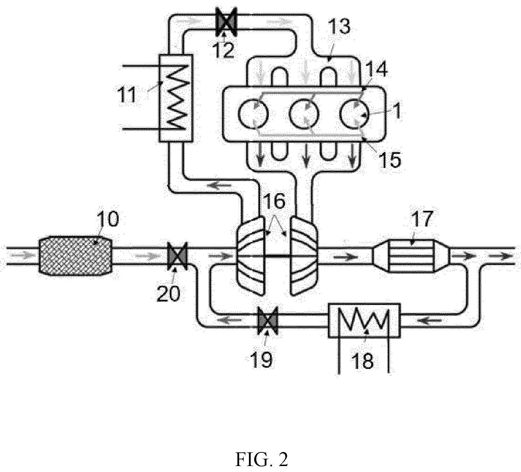

A second aspect of the present application discloses a gasoline engine for a hybrid vehicle, FIG. 2 is a schematic diagram of a structure of a gasoline engine for a hybrid vehicle according to the present application, including a low-pressure EGR system and the engine combustion system described above.

The low-pressure EGR (exhaust gas recirculation) system is disposed at an exhaust side of the gasoline engine. The low-pressure EGR system includes an EGR cooler 18, a three-way catalytic converter 17 and a turbocharger compressor 16. The three-way catalytic converter 17 is connected with an inlet of the EGR cooler 18, and the turbocharger compressor 16 is connected with an outlet of the EGR cooler 18.

The gasoline engine for hybrid vehicle provided by the embodiment of the present application adopts the combustion system described above in combination with the low-pressure EGR system, and by introducing the three-way catalytic converter 17, a certain amount of exhaust gas can be introduced into the cylinder as demand, reduce a temperature in the cylinder, restrain knocking, advance an ignition angle, and improve effective output work generated by combustion, so as to improve the fuel economy.

In the embodiment of that present application, a working flow of the gasoline engine is described as follows in combination with FIG. 2. Fresh air is mixed with EGR exhaust gas through an air filter 10, and after being pressurized by the turbocharger compressor 16, it is cooled by the water-air intercooler 11, and then enters the combustion chamber 1 through an intake manifold 13. While in-cylinder fuel injection is carried out by the high-pressure direct injection system 14, and the air-fuel ratio is controlled to be equal to 14.7. The high-energy ignition system 15 ignites the homogeneous and lean mixed gas, and exhaust gas after combustion is expelled after being treated by the three-way catalytic converter 17 of post-treatment 21.

A throttle body 12 is disposed between the water-air intercooler 11 and the intake manifold 13. A part of the exhaust gas passing through the three-way catalytic converter 17 returns to the combustion chamber 1 through the EGR system, which can increase the mixing specific heat capacity and total mass in the combustion chamber 1, reduce the combustion temperature, reduce the heat transfer loss, reduce the pumping loss at partial load, and at the same time slow down the combustion velocity, restrain knocking, and ensure that the air-fuel ratio is equal to 14.7. The independent water-air intercooler can ensure the temperature of the mixed gas after compression by the turbocharger according to combustion requirements, reduce a pressure drop of the entire intake system. With the high-pressure direct injection system 14 (with a fuel injection pressure > 350bar), an injection penetration distance and an injection particle size are greatly reduced, a fuel atomization effect is improved, a possibility of wet wall is reduced, and an amount of fuel injection is controlled. The lean mixed gas is ignited by the high-energy ignition system 15 to improve its combustion stability (ensuring COV<3%). Through the homogeneous lean combustion, the fuel combustion efficiency is greatly increased, the thermal efficiency of the engine is improved, and the emission of CO and the emission of THC are greatly reduced, and the emission of NOx is kept at a relatively low level. Excess CO and THC are converted by the three-way catalytic converter 17 of the post-treatment system, so as to meet emission requirements.

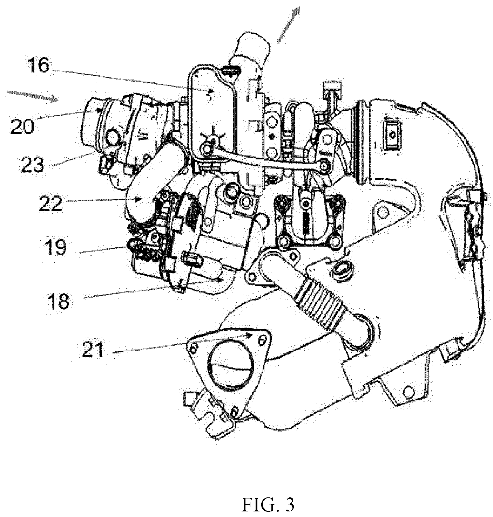

FIG. 3 is a schematic diagram of a structure of a low-pressure EGR system according to an embodiment of the present application. The low-pressure EGR system further includes an EGR valve 19, a hose 22 and a low-pressure intake aluminum pipe 23.

The EGR valve 19 is connected with an outlet of the EGR cooler 18, the hose 22 is communicated with the EGR valve 19, one end of the low-pressure intake aluminum pipe 23 is communicated with the hose 22, and the other end of the low-pressure intake aluminum pipe 23 is communicated with a turbocharger compressor 16. The hose 22 is communicated with the EGR valve 19 to introduce exhaust gas into the low-pressure intake aluminum pipe 23. Fresh air and exhaust gas are mixed in the low-pressure intake aluminum pipe 23 and then entered into the turbocharger compressor 16. The turbocharger compressor 16 is fixed directly to a cylinder head of the gasoline engine. **In** the embodiment of the present application, the EGR valve 19 is used for adjusting opening and controlling a flow rate of the exhaust gas. A pressure difference sensor can read the pressure difference before and after the EGR valve 19 and calculate the flow rate of the exhaust gas through the EGR valve 19. In the embodiment of the present application, a filter screen is provided at an inlet of the EGR cooler 18.

In the embodiment of the present application, the low-pressure EGR system further includes an EGR pressure regulating valve 20, wherein the EGR pressure regulating valve 20 is communicated with the low-pressure intake aluminum pipe 23. Fresh air enters the low-pressure intake aluminum pipe 23 through the EGR pressure regulating valve 20. The EGR pressure regulating valve 20 ensures that the whole engine running region can use EGR by adjusting opening of a valve plate, and there is a certain pressure difference in the EGR passage, so that an EGR rate can be accurately calculated.

In the embodiment of the present application, a structure of the three-way catalytic converter 17 includes a three-way catalytic converter 17 and a three-way catalytic converter bracket, and the bracket of the three-way catalytic converter 17 is used for supporting the three-way catalytic converter 17. The three-way catalytic converter 17 is fixed to the cylinder head and the cylinder block by an upper support point of the three-way catalytic converter bracket, and a lower support point of the three-way catalytic converter bracket is fixed to the cylinder block of the gasoline engine.

A third aspect of the embodiment of the present application discloses a vehicle including the engine combustion system or the gasoline engine for hybrid vehicle described above.

The above are only preferred embodiments of the present application and are not intended to limit the present application.

## Claims

1. An engine combustion system, comprising a combustion chamber (1) and a valve structure; wherein
the combustion chamber (1) is provided with an air intake side gas extrusion structure (2), an exhaust side gas extrusion structure (3), a front end gas extrusion structure (4) and a rear end gas extrusion structure (5);
the valve structure comprises a first intake valve (6), a second intake valve (7), a first exhaust valve (8) and a second exhaust valve (9); wherein the first intake valve (6) is disposed at one side of a front end of the combustion chamber (1), and the second intake valve (7) is disposed at one side of a rear end of the combustion chamber (1) corresponding to the first intake valve (6); the first exhaust valve (8) is disposed at the other side of the front end of the combustion chamber (1), and the second exhaust valve (9) is disposed at one side of the rear end of the combustion chamber (1) corresponding to the first exhaust valve (8);
the air intake side gas extrusion structure (2) is disposed between the first intake valve (6) and the second intake valve (7), the exhaust side gas extrusion structure (3) is disposed between the first exhaust valve (8) and the second exhaust valve (9), the front end gas extrusion structure (4) is disposed between the first intake valve (6) and the first exhaust valve (8), and the rear end gas extrusion structure (5) is disposed between the second intake valve (7) and the second exhaust valve (9); and
the air intake side gas extrusion structure (2), the front end gas extrusion structure (4) and the rear end gas extrusion structure (5) are all flat gas extrusion structures, and **characterized in that** the exhaust side gas extrusion structure (3) is an oblique gas extrusion structure.

2. The engine combustion system according to claim 1, wherein a first flow guide curved surface is disposed between the first intake valve (6) and the first exhaust valve (8), an intake valve end of the first flow guide curved surface is higher than an exhaust valve end of the first flow guide curved surface; and
a second flow guide curved surface is disposed between the first intake valve (6) and the first exhaust valve (8), and an intake valve end of the second flow guide curved surface is higher than an exhaust valve end of the second flow guide curved surface.

3. The engine combustion system according to claim 1, wherein the combustion chamber (1) comprises a piston, and the piston is convex at its top.

4. The engine combustion system according to claim 1, further comprising a high-pressure direct injection system (14), and the high-pressure direct injection system (14) comprises a fuel injector capable of atomizing fuel and injecting the fuel into the combustion chamber (1).

5. The engine combustion system according to claim 1, further comprising a high-energy ignition system (15) for igniting a mixed gas in the combustion chamber (1).

6. A gasoline engine for hybrid vehicle, comprising a low-pressure exhaust gas recirculation (EGR) system and the engine combustion system according to any one of claims 1 to 5;
wherein the low-pressure EGR system is disposed at an exhaust side of the gasoline engine; the low-pressure EGR system comprises an EGR cooler (18), a three-way catalytic converter (17) and a turbocharger compressor (16); and
the three-way catalytic converter (17) is connected with an inlet of the EGR cooler (18), and the turbocharger compressor (16) is connected with an outlet of the EGR cooler (18).

7. The gasoline engine for hybrid vehicle according to claim 6, wherein the low-pressure EGR system further comprises an EGR valve (19), a hose (22) and a low-pressure intake aluminum pipe (23);
the EGR valve (19) is connected with the outlet of the EGR cooler (18), and the hose (22) is communicated with the EGR valve (19), one end of the low-pressure intake aluminum pipe (23) is communicated with the hose (22), and the other end of the low-pressure intake aluminum pipe (23) is communicated with the turbocharger compressor (16).

8. The gasoline engine for hybrid vehicle according to claim 7, wherein the low-pressure EGR system further comprises an EGR pressure regulating valve (20);
the EGR pressure regulating valve (20) is communicated with the low-pressure intake aluminum pipe (23).

9. The gasoline engine for hybrid vehicle according to claim 6, wherein the low-pressure EGR system further comprises a three-way catalytic converter bracket for supporting the three-way catalytic converter (17).

10. A vehicle, comprising the engine combustion system according to any one of claims 1 to 5.

11. A vehicle, comprising the gasoline engine for hybrid vehicle according to any one of claims 6 to 9.

## Patentansprüche

1. Motorverbrennungssystem, umfassend eine Verbrennungskammer (1) und eine Ventilstruktur, wobei die Verbrennungskammer (1) ist mit einer lufteinlassseitigen Gasaustrittsstruktur (2), einer auslassseitigen Gasaustrittsstruktur (3), einer vorderseitigen Gasaustrittsstruktur (4) und einer rückseitigen Gasaustrittsstruktur (5) bereitgestellt; die Ventilstruktur ein erstes Einlassventil (6), ein zweites Einlassventil (7), ein erstes Auslassventil (8) und ein zweites Auslassventil (9) umfasst; wobei das erste Einlassventil (6) an einer Seite eines vorderen Endes der Verbrennungskammer (1) angeordnet ist und das zweite Einlassventil (7) an einer Seite eines hinteren Endes der Verbrennungskammer (1) angeordnet ist, das dem ersten Einlassventil (6) entspricht; das erste Auslassventil (8) an der anderen Seite des vorderen Endes der Verbrennungskammer (1) angeordnet ist, und das zweite Auslassventil (9) an einer Seite des hinteren Endes der Verbrennungskammer (1) entsprechend dem ersten Auslassventil (8) angeordnet ist;
die lufteinlassseitige Gasaustrittsstruktur (2) zwischen dem ersten Einlassventil (6) und dem zweiten Einlassventil (7) angeordnet ist, die auslassseitige Gasaustrittsstruktur (3) zwischen dem ersten Auslassventil (8) und dem zweiten Auslassventil (9) angeordnet ist, die vorderseitige Gasaustrittsstruktur (4) zwischen dem ersten Einlassventil (6) und dem ersten Auslassventil (8) angeordnet ist, und die rückseitige Gasaustrittsstruktur (5) zwischen dem zweiten Einlassventil (7) und dem zweiten Auslassventil (9) angeordnet ist; und
die lufteinlassseitige Gasaustrittsstruktur (2), die vorderseitige Gasaustrittsstruktur (4) und die rückseitige Gasaustrittsstruktur (5) alle flache Gasaustrittsstrukturen sind, und **dadurch gekennzeichnet, dass** die auslassseitige Gasaustrittsstruktur (3) eine schräge Gasaustrittsstruktur ist.

2. Motorverbrennungssystem nach Anspruch 1, wobei eine erste gekrümmte Oberfläche der Strömungsführung zwischen dem ersten Einlassventil (6) und dem ersten Auslassventil (8) angeordnet ist, ein Einlassventilende der ersten gekrümmten Oberfläche der Strömungsführung höher liegt als ein Auslassventilende der ersten gekrümmten Oberfläche der Strömungsführung; und
eine zweite gekrümmte Oberfläche der Strömungsführung zwischen dem ersten Einlassventil (6) und dem ersten Auslassventil (8) angeordnet ist, und ein Einlassventilende der zweiten gekrümmten Oberfläche der Strömungsführung höher liegt als ein Auslassventilende der zweiten gekrümmten Oberfläche der Strömungsführung.

3. Motorverbrennungssystem nach Anspruch 1, wobei die Verbrennungskammer (1) einen Kolben umfasst und der Kolben an seiner Oberseite konvex ist.

4. Motorverbrennungssystem nach Anspruch 1, ferner umfassend ein Hochdruckdirekteinspritzsystem (14), wobei das Hochdruckdirekteinspritzsystem (14) eine Kraftstoffeinspritzdüse umfasst, die in der Lage ist, Kraftstoff zu zerstäuben und den Kraftstoff in die Verbrennungskammer (1) einzuspritzen.

5. Motorverbrennungssystem nach Anspruch 1, ferner umfassend ein Hochenergiezündsystem (15) zum Zünden von Mischgas in der Verbrennungskammer (1).

6. Benzinmotor für Hybridfahrzeug, umfassend ein Niederdruckabgasrückführungssystem (EGR) und das Motorverbrennungssystem nach einem der Ansprüche 1 bis 5;
wobei das Niederdruck-EGR-System an einer Abgasseite des Benzinmotors angeordnet ist; das Niederdruck-EGR-System einen EGR-Kühler (18), einen Dreiwegekatalysator (17) und einen Turboladerkompressor (16) umfasst; und
der Dreiwegekatalysator (17) mit einem Einlass des EGR-Kühlers (18) verbunden ist, und der Turboladerkompressor (16) mit einem Auslass des EGR-Kühlers (18) verbunden ist.

7. Benzinmotor für Hybridfahrzeug nach Anspruch 6, wobei das Niederdruck-EGR-System ferner ein EGR-Ventil (19), einen Schlauch (22) und ein Niederdruck-Ansaugaluminiumrohr (23) umfasst;
das EGR-Ventil (19) mit dem Auslass des EGR-Kühlers (18) verbunden ist und der Schlauch (22) mit dem EGR-Ventil (19) in Verbindung steht, ein Ende des Niederdruck-Ansaugaluminiumrohrs (23) mit dem Schlauch (22) verbunden ist und das andere Ende des Niederdruck-Ansaugaluminiumrohrs (23) mit dem Turboladerkompressor (16) verbunden ist.

8. Benzinmotor für Hybridfahrzeug nach Anspruch 7, wobei das Niederdruck-EGR-System ferner ein EGR-Druckregulierventil (20) umfasst;
das EGR-Druckregelventil (20) mit dem Niederdruck-Aluminiumansaugrohr (23) verbunden ist.

9. Benzinmotor für Hybridfahrzeug nach Anspruch 6, wobei das Niederdruck-EGR-System ferner eine Dreiwegekatalysatorhalterung zur Unterstützung des Dreiwegekatalysators (17) umfasst.

10. Fahrzeug, umfassend das Motorverbrennungssystem nach einem der Ansprüche 1 bis 5.

11. Fahrzeug, umfassend den Benzinmotor für ein Hybridfahrzeug nach einem der Ansprüche 6 bis 9.

## Revendications

1. Système de combustion pour moteur, comprenant une chambre de combustion (1) et une structure de soupape ; dans lequel
la chambre de combustion (1) est pourvue d'une structure d'extrusion de gaz côté admission d'air (2), d'une structure d'extrusion de gaz côté échappement (3), d'une structure d'extrusion de gaz d'extrémité avant (4) et d'une structure d'extrusion de gaz d'extrémité arrière (5) ;
la structure de soupape comprend une première soupape d'admission (6), une seconde soupape d'admission (7), une première soupape d'échappement (8) et une seconde soupape d'échappement (9) ; dans lequel la première soupape d'admission (6) est disposée sur un côté d'une extrémité avant de la chambre de combustion (1), et la seconde soupape d'admission (7) est disposée sur un côté d'une extrémité arrière de la chambre de combustion (1) correspondant à la première soupape d'admission (6) ; la première soupape d'échappement (8) est disposée sur l'autre côté de l'extrémité avant de la chambre de combustion (1), et la seconde soupape d'échappement (9) est disposée sur un côté de l'extrémité arrière de la chambre de combustion (1) correspondant à la première soupape d'échappement (8) ;
la structure d'extrusion de gaz côté admission d'air (2) est disposée entre la première soupape d'admission (6) et la seconde soupape d'admission (7), la structure d'extrusion de gaz côté échappement (3) est disposée entre la première soupape d'échappement (8) et la seconde soupape d'échappement (9), la structure d'extrusion de gaz d'extrémité avant (4) est disposée entre la première soupape d'admission (6) et la première soupape d'échappement (8), et la structure d'extrusion de gaz d'extrémité arrière (5) est disposée entre la seconde soupape d'admission (7) et la seconde soupape d'échappement (9) ; et
la structure d'extrusion de gaz côté admission d'air (2), la structure d'extrusion de gaz d'extrémité avant (4) et la structure d'extrusion de gaz d'extrémité arrière (5) sont toutes des structures d'extrusion de gaz plates, et **caractérisé en ce que** la structure d'extrusion de gaz côté échappement (3) est une structure d'extrusion de gaz oblique.

2. Système de combustion pour moteur selon la revendication 1, dans lequel une première surface incurvée de guidage d'écoulement est disposée entre la première soupape d'admission (6) et la première soupape d'échappement (8), une extrémité de soupape d'admission de la première surface incurvée de guidage d'écoulement est plus haute qu'une extrémité de soupape d'échappement de la première surface incurvée de guidage d'écoulement ; et
une seconde surface incurvée de guidage d'écoulement est disposée entre la première soupape d'admission (6) et la première soupape d'échappement (8), et une extrémité de soupape d'admission de la seconde surface incurvée de guidage d'écoulement est plus haute qu'une extrémité de soupape d'échappement de la seconde surface incurvée de guidage d'écoulement.

3. Système de combustion pour moteur selon la revendication 1, dans lequel la chambre de combustion (1) comprend un piston, et le piston est convexe à son sommet.

4. Système de combustion pour moteur selon la revendication 1, comprenant en outre un système d'injection directe haute pression (14), et le système d'injection directe haute pression (14) comprend un injecteur de carburant capable d'atomiser le carburant et d'injecter le carburant dans la chambre de combustion (1).

5. Système de combustion pour moteur selon la revendication 1, comprenant en outre un système d'allumage à haute énergie (15) destiné à allumer un gaz mélangé dans la chambre de combustion (1).

6. Moteur à essence pour véhicule hybride, comprenant un système de recirculation de gaz d'échappement (EGR) basse pression et le système de combustion pour moteur selon l'une quelconque des revendications 1 à 5 ;
dans lequel le système EGR basse pression est disposé sur un côté échappement du moteur à essence ; le système EGR basse pression comprend un refroidisseur EGR (18), un convertisseur catalytique à trois voies (17) et un compresseur de turbocompresseur (16) ; et
le convertisseur catalytique à trois voies (17) est relié à une entrée du refroidisseur EGR (18), et le compresseur de turbocompresseur (16) est relié à une sortie du refroidisseur EGR (18).

7. Moteur à essence pour véhicule hybride selon la revendication 6, dans lequel le système EGR basse pression comprend en outre une soupape EGR (19), un tuyau (22) et un tuyau d'admission en aluminium basse pression (23) ;
la soupape EGR (19) est reliée à la sortie du refroidisseur EGR (18), et le tuyau (22) est en communication avec la vanne EGR (19), une extrémité du tuyau d'admission en aluminium basse pression (23) est en communication avec le tuyau (22), et l'autre extrémité du tuyau d'admission en aluminium basse pression (23) est en communication avec le compresseur de turbocompresseur (16).

8. Moteur à essence pour véhicule hybride selon la revendication 7, dans lequel le système EGR basse pression comprend en outre une soupape de régulation de pression EGR (20) ;
la soupape de régulation de pression EGR (20) est en communication avec le tuyau d'admission en aluminium basse pression (23).

9. Moteur à essence pour véhicule hybride selon la revendication 6, dans lequel le système EGR basse pression comprend en outre un support de convertisseur catalytique à trois voies destiné à supporter le convertisseur catalytique à trois voies (17).

10. Véhicule comprenant le système de combustion pour moteur selon l'une quelconque des revendications 1 à 5.

11. Véhicule comprenant le moteur à essence pour véhicule hybride selon l'une quelconque des revendications 6 à 9.
